# EUROPÄISCHE PATENTSCHRIFT

(11) **EP 2 384 533 B1**
(45) Veröffentlichungstag und Bekanntmachung des Hinweises auf die Patenterteilung: **28.09.2016**
(21) Anmeldenummer: 09744407.9
(22) Anmeldetag: 02.11.2009
(51) Int. Cl.: H02K 5/10, H02K 5/128, F16J 15/06, H02K 5/24

(54) **ELEKTRONISCH KOMMUTIERTE ELEKTRISCHE MASCHINE**
ELECTRONICALLY COMMUTATED ELECTRIC MACHINE
MACHINE ÉLECTRIQUE À COMMUTATION ÉLECTRONIQUE

(30) Priorität: 02.01.2009 DE 102009000010
(43) Veröffentlichungstag der Anmeldung: 09.11.2011
(73) Patentinhaber: Robert Bosch GmbH, 70442 Stuttgart (DE)
(72) Erfinder: HEIN, Bernd, 72270 Baiersbronn/Schoenmuenzach (DE); THIERY, Jerome, F-67100 Strasbourg (FR); HEIER, Christoph, 76473 Iffezheim (DE)
(86) Internationale Anmeldenummer: PCT/EP2009/064436
(87) Internationale Veröffentlichungsnummer: WO 2010/076062

(56) Entgegenhaltungen:
- EP-A1- 0 261 542
- EP-A1- 1 429 443
- EP-A1- 1 648 025
- WO-A1-03/055040
- WO-A1-2005/034309
- WO-A1-2007/060066
- WO-A2-03/083311
- WO-A2-2007/129205
- FR-A- 1 158 578
- US-A- 4 311 317
- US-A1- 2002 157 489
- US-A1- 2006 288 560
- US-A1- 2007 069 841
- US-A1- 2008 284 112
- US-B2- 7 196 438

## Beschreibung

Die Erfindung betrifft eine elektronisch kommutierte, elektrische Maschine mit einem Statorgehäuse, das in einem Statorraum einen Stator aufnimmt und gegenüber einem einen Rotor aufnehmenden Rotorraum abgrenzt.

### Stand der Technik

Elektronisch kommutierte, also bürstenlose Motoren, finden zunehmend Verwendung, insbesondere in der Automobiltechnik. Solche bürstenlosen Motoren werden beispielsweise als Antriebe für Wasserpumpen verwendet. Insbesondere in solchen Anwendungsfällen weisen derartige Motoren ein Statorgehäuse auf, das einen Stator in einem hierfür vorgesehenen Statorraum aufnimmt, wobei eine Abgrenzung zu einem Rotorraum vorgesehen ist; der Stator ist demzufolge vollständig eingehaust und zum Rotor sowie zur Umgebung hin abgeschottet. Um derartige Anordnungen montieren zu können, ist ein gewisses Spiel der einzelnen Bauteile erforderlich. Nach Abschluss der Montage sollen die Bauteile aber spielfrei zueinander gelagert sein, um eine schwingfreie Ausbildung der Anordnung zu erreichen und ein erhöhtes Geräuschniveau durch ungenügende

Dämpfung oder Klappergeräusche vermeiden zu können. Im Stand der Technik wird diese Spielfreiheit nur durch aufwendige und nicht leicht beherrschbare Zusatzmaßnahmen, wie beispielsweise ein Verschrauben, Vergießen oder Verkleben der einzelnen Bauteile, erreicht. Hierdurch lässt sich zwar eine spielfreie Anordnung erreichen, allerdings ist aufgrund der nun völlig fehlenden Spielfreiheit die thermische Ausdehnung der Bauteile, insbesondere im Langzeitbetrieb, problematisch. Durch unterschiedliche thermische Ausdehnung einzelner Bauteile werden die im Stand der Technik bekannten Maßnahmen, wie insbesondere Vergießen und Verkleben, über die Zeit beansprucht und können bei längerer Betriebsdauer in ungünstigen Fällen versagen, insbesondere können

Verklebungen oder Vergießungen reißen, wodurch die die Anordnung undicht werden kann, was zu einem Bauteilausfall führen kann.

Aus der Offenlegungsschrift US 7,196,438 B2 ist bereits eine elektrische Maschine mit einem Dichtring bekannt, der axial zwischen Stator und Gehäusedeckel verspannt ist. Aus der Offenlegungsschrift US 2002/157489 A1 ist weiterhin eine elektrische Maschine mit einem 5-förmigen Dichtring bekannt, der als Radialdichtung zwischen Gehäuse und Welle dient.

Aufgabe der Erfindung ist es, eine kostengünstige und montagetechnisch/prozesstechnisch leicht handhabbare Lösung zur schwingungsdämpfenden Lagerung von Statoren in gattungsgemäßen, elektrisch kommutierten, elektrischen Maschinen bereitzustellen, die einerseits eine sehr gute Abdichtung und Spielfreiheit ermöglichen und gleichzeitig Bauteiltoleranzen ausgleichen, insbesondere Bauteiltoleranzen aufgrund unterschiedlicher Erwärmung im Betrieb.

### Offenbarung der Erfindung

Hierzu wird eine elektronisch kommutierte, elektrische Maschine mit den Merkmalen des Anspruchs 1 vorgeschlagen, mit einem Statorgehäuse, das in einem Statorraum einen Stator aufnimmt und gegenüber einem einen Rotor aufnehmenden Rotorraum abgrenzt. Hierbei ist vorgesehen, dass das Statorgehäuse aus einem Grundgehäuse und einem Deckel besteht, wobei zwischen Grundgehäuse und Deckel ein elastisches Dichtelement angeordnet ist, das mit mindestens einem Radialbereich in das Innere des Statorgehäuses hineinragt und dort ein den Stator beaufschlagendes Toleranzausgleichselement bildet. Der Stator ist demzufolge im Statorgehäuse angeordnet, wobei das Statorgehäuse aus dem Grundgehäuse und einem dieses abschließenden Deckel besteht. Zwischen dem Grundgehäuse und dem Deckel ist das Dichtelement angeordnet, das zumindest bereichsweise in Radialrichtung, nämlich mit dem Radialbereich, in das Innere des Statorgehäuses hineinragt und den Stator beaufschlagt. Durch diese Beaufschlagung des Stators bildet es das Toleranzausgleichselement, das ein Bauteilgrößen- beziehungsweise Einbauspiel des Stators im Statorgehäuse ausgleicht. Der Stator wird auf diese Weise im geschlossenen Gehäuse spielfrei gehalten.

Erfindungsgemäß beaufschlagt das Toleranzausgleichselement den Stator in axialer Richtung. Der Stator weist demzufolge Stirnseiten auf, von denen wenigstens eine von wenigstens einem Bereich des Toleranzausgleichselements beaufschlagt wird, dergestalt, dass die entsprechende Kraftwirkung in Axialrichtung des Stators erfolgt. Zumindest im Wesentlichen ist die Kraftwirkung demzufolge in Axialrichtung des Rotors, wodurch ein Axialspiel (insbesondere Längentoleranz) verhindert wird.

In einer bevorzugten Ausführungsform ist der Stator ein in das Statorgehäuse axial einsetzbarer Einlegestator. Damit ist gemeint, dass der Stator als Baugruppe vorgefertigt ist, insbesondere als Baueinheit mit Spulenkörper und vorzugsweise Kommutatorelektronik beziehungsweise Ansteuerelektronik vorgefertigt, wobei der Stator axial in das Statorgehäuse einführbar ist. Zur Montage der elektrischen Maschine wird der Stator demzufolge im Wesentlichen in

Axialrichtung in das Statorgehäuse eingeschoben und dort von vorzugsweise formangepassten Aufnahmen und/oder Verdrehsicherungen in seiner Einbaulage gehalten und bevorzugt über dort vorgesehene Steckverbinder elektronisch kontaktiert, wobei solche Steckverbinder das Statorgehäuse nach außen zum Anschluss an ein elektrisches System durchgreifen können.

Das Statorgehäuse ist in einer Ausführungsform topfförmig ausgebildet. Dies bedeutet, dass das Statorgehäuse im Wesentlichen beispielsweise als Rotationskörper ausgebildet ist, der eine geschlossene Bodenwand und hiermit verbundene Seitenwandungen aufweist, wobei ein Deckelbereich von dem Deckel verschlossen wird und der Stator in den so gebildeten Topfinnenraum eingebracht wird.

In einer weiteren Ausführungsform weist der Deckel einen zentralen Topfbereich auf, der in das Innere des Stators hineinragt. Der Deckel seinerseits ist in dieser Ausführung im Wesentlichen topfförmig ausgebildet, wobei ein zentraler Topfbereich in das Innere des Stators hineinragt, beispielsweise den Stator durchgreift. Der Stator ist dabei im Wesentlichen ringförmig, etwa als Spulenring, ausgebildet.

In einer weiteren Ausführungsform stützt sich der Stator am Statorgehäuse an einem Statorsitz ab. Der Statorsitz bewirkt hierbei eine definierte räumliche Anordnung des Stators, der beispielsweise als Statorring ausgebildet ist, insbesondere als ringförmiger Spulenkörper mit aufgesetzter Elektronik, wie vorstehend beschrieben, im Statorgehäuse. Der Statorsitz kann hierbei aus einem oder mehreren flächigen Bereichen oder aus einzelnen Fixierpunkten bestehen, die den Stator insbesondere axial und/oder radial abstützen.

Erfindungsgemäß weist das Toleranzausgleichselement im nicht beaufschlagten Zustand zumindest abschnittsweise eine Bogenform auf. Hiermit ist gemeint, dass das Toleranzausgleichselement nicht flächig-eben, sondern mindestens abschnittsweise in der Form eines Bogens ausgebildet ist, hierbei also eine Bogenhöhe und eine Bogenweite aufweist und die Aufbringung einer Vorspannung erlaubt.

In einem vom Deckel beaufschlagten Zustand wird erfindungsgemäß das Toleranzausgleichselement in seiner Bogenwölbung verkleinert. Dies bedeutet, dass die Bogenhöhe bei Beaufschlagung durch den Deckel einerseits und/oder den Stator andererseits in einer solchen Art und Weise verformt wird, dass sich seine Bogenwölbung verkleinert, also die Bogenhöhe reduziert. Hierbei kann es in einer bestimmten Ausführungsform möglich sein, dass sich die Bogenweite vergrößert, je mehr die Bogenwölbung abnimmt, also die Bogenform des Toleranzausgleichselements durch die Beaufschlagung gestreckt wird, insbesondere dergestalt, dass sich der Bogen in Radialrichtung in das Statorgehäuse hinein erstreckt. Es ist aber auch möglich, dass das Toleranzausgleichselement von dem Deckel beaufschlagt und in seiner Bogenwölbung verkleinert, die Bogenhöhe also reduziert wird, wobei das Toleranzausgleichselement in dieser Bogenwölbung aber lediglich gestaucht, nicht jedoch gestreckt wird. Eine solche Streckung kann beispielsweise durch einen in Radialrichtung verlaufenden Anschlag verhindert werden; die Stauchung bei Beaufschlagung mit dem Deckel wird dann von der Materialstruktur des Toleranzausgleichselements aufgenommen.

Erfindungsgemäß ist das Dichtelement als Dichtring ausgebildet, also als umlaufende, ringförmige Struktur.

Erfindungsgemäß weist das Dichtelement einen Dichtbereich zur Abdichtung des Statorgehäuses gegenüber dem Deckel auf. Der Dichtbereich des Dichtelements ist hierbei ein solcher Abschnitt des Dichtelements, dessen Funktion sich im Wesentlichen in der Abdichtung des Statorgehäuses erschöpft. Der Dichtbereich kann aus diesem Grunde in einer solchen Art und Weise ausgebildet werden, dass er in seiner Spezifikation, insbesondere in Bezug auf seine Ausdehnung und Materialbeschaffenheit, ganz auf die Dichtfunktion ausgerichtet werden kann.

Bevorzugt liegt der Dichtbereich zumindest teilweise in einer Ringnut des Statorgehäuses ein. Der Dichtbereich korrespondiert hierbei, zumindest teilweise einliegend, mit der Ringnut des Statorgehäuses, insbesondere mit einer stirnseitig am Statorgehäuses ausgebildeten, umlaufenden Ringnut. Hierbei ist insbesondere vorgesehen, dass im geschlossenen Zustand des Statorgehäuses, also bei aufliegendem Deckel, der Dichtbereich an mindestens zwei, bevorzugt drei, Seiten der Ringnut anliegt, weshalb der Dichtbereich bevorzugt in Axialerstreckung relativ zur Ringnut vergrößert ausgebildet wird, so dass sich diese vergrößerte Ausbildung bei Schließen des Deckels staucht und Seitenwände der Ringnut in Berührlage dichtend beaufschlagt. Die Ringnut ist im Statorgehäuse bevorzugt am Grundgehäuse ausgebildet.

Erfindungsgemäß ist der Dichtbereich im Querschnitt L-förmig ausgebildet. Ein Schenkel der L-förmigen Ausbildung greift hier in die Ringnut ein oder beaufschlagt eine andere Wandung des Statorgehäuses, insbesondere des Grundgehäuses, in Axialrichtung, so dass mindestens zwei im Wesentlichen quer zueinander verlaufende Berührflächen ausgebildet werden, die abdichtend wirken. Bevorzugt ist in der L-förmigen Ausbildung der in die Ringnut eingreifende Schenkel, wie vorstehend beschrieben, relativ zur Tiefe der Ringnut vergrößert ausgebildet, so dass bei Schließen des Statorgehäuses mit dem Deckel eine Stauchung dieses Schenkels stattfindet und eine bevorzugt dreiseitige Anlage des Dichtbereichs innerhalb der Ringnut erfolgt.

Erfindungsgemäß ist vorgesehen, dass der Dichtring im Querschnitt die Form einer "5" aufweist, wobei die L-förmige Ausbildung des Dichtbereichs an die bogenförmige

Ausbildung des Toleranzausgleichselements unmittelbar anschließt und hierbei die Querschnittskontur der (arabischen) Ziffer 5 ergibt.

Weitere vorteilhafte Ausführungsformen ergeben sich aus den Unteransprüchen und aus Kombinationen derselben.

Die Erfindung wird nachfolgend anhand eines Ausführungsbeispiels näher erläutert, ohne aber hierauf beschränkt zu sein.

Es zeigen
- Figur 1: eine elektrische Maschine mit Spulenkörper, Dichtelement und topfförmigem Deckel in Einzelteildarstellung;
- Figur 2: das Dichtelement in Einbaulage unmittelbar vor dem Verschließen des Deckels und
- Figur 3: das Dichtelement nach Verschließen des Deckels.

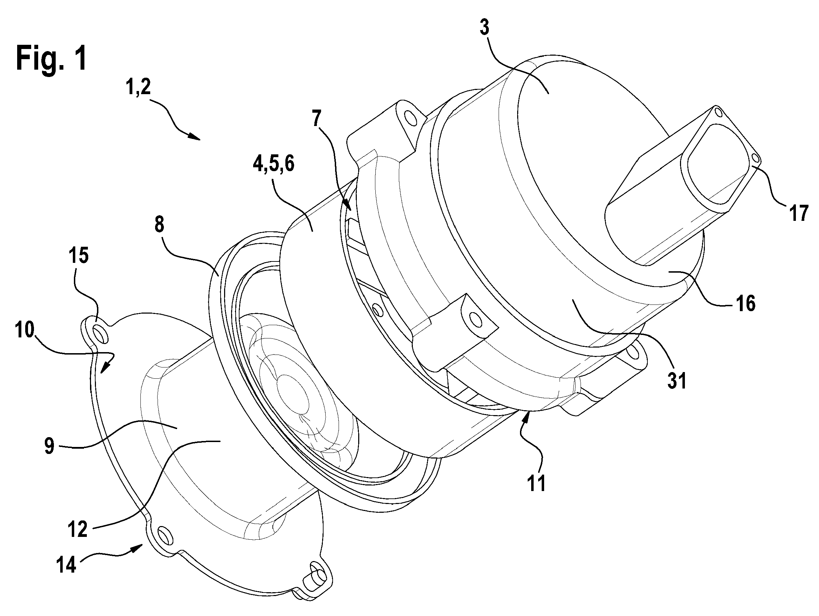

Figur 1 zeigt in Einzelteildarstellung eine elektrisch kommutierte, elektrische Maschine 1, nämlich einen Elektromotor 2, mit einem Statorgehäuse 3, das zur Aufnahme eines Stators 4 im Wesentlichen topfförmig ausgebildet ist, wobei der Stator 4 als Ringstator 5 und als axial in das Statorgehäuse 3 einsetzbarer Einlegestator 6 ausgebildet ist, und wobei der Stator 4 eine Statorelektronik 7 aufweist, die die elektronische Kommutierung einer Versorgungsgleichspannung vornimmt. Dem Statorgehäuse 3, nämlich einen den Stator 4 aufnehmenden Grundgehäuse 31, und dem (eingeschobenen) Stator 4 zugeordnet ist ein elastisches Dichtelement 8, das zur Abdichtung zwischen Grundgehäuse 31 und einem das Grundgehäuse 31 verschließenden Deckel 9 ringförmig zur Anlage sowohl an einem Deckelanschlussbereich 10 als auch an einem diesem zugewandten und ihm im Wesentlichen formentsprechenden Gehäuseanschlussbereich 11 ringförmig einliegend vorgesehen ist. Der Deckel 9 weist einen zentralen Topfbereich 12 auf, der sowohl das elastische Dichtelement 8 als auch den Stator 4, nämlich den Ringstator 5, durchgreift beziehungsweise zumindest abschnittsweise in den Stator 4 hineinragt. In geschlossenem Zustand des Statorgehäuses 3, also dann, wenn ein zur Aufnahme des Stators 4 im Statorgehäuse 3 vorgesehener Statorraum 13 verschlossen ist, ist im nun nach außen zur Umgebung hin offenen Topfbereich 12 des Deckels 9 ein Rotorraum 14 zur Aufnahme eines nicht dargestellten Rotors der elektrischen Maschine 1 ausgebildet, wobei der Rotor durch seine Einlage in dem Rotorraum 14 des Topfbereichs 12, der in den Stator 4 eingreift, vom Stator 4 und einem von diesem im Betrieb ausgebildeten, nicht dargestellten Mangnetwechselfeld umgeben ist. Die Verbindung zwischen dem Deckel 9 und dem Statorgehäuse 3 erfolgt hierbei über eine Verschraubung 15, so dass im Servicefall der eingehauste Stator 4 zugänglich ist. Das Statorgehäuse 3 weist an der dem Deckel gegenüberliegenden, geschlossenen Topfbodenseite 16 ein Steckelement 17 zur Bewirkung von elektrischen Anschlüssen (nicht dargestellt) des Stators 4 und der Statorelektronik 7 auf.

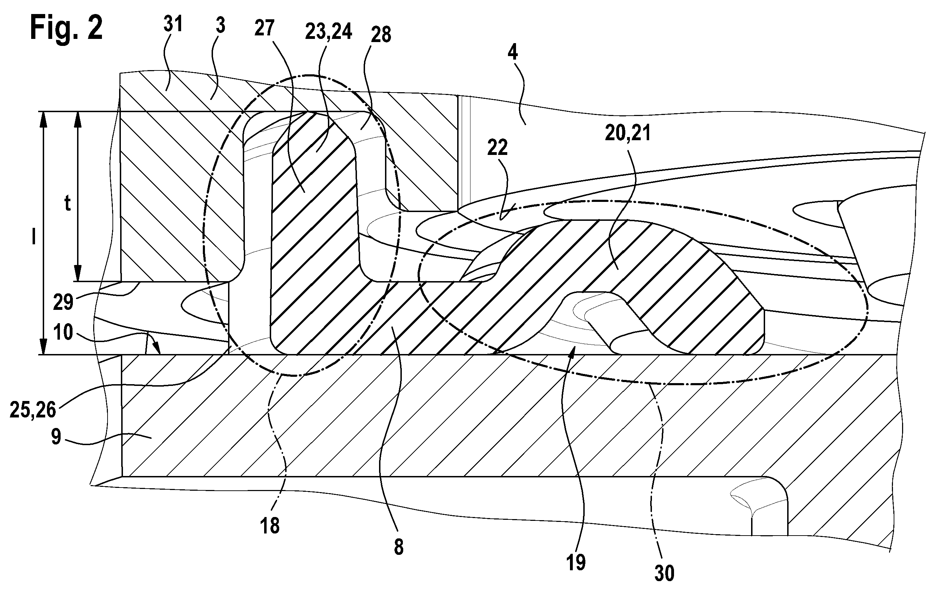

Figur 2 zeigt abschnittsweise im Querschnitt den Deckel 9 im Deckelanschlussbereich 10 mit eingelegtem Dichtelement 8 und eingelegtem Stator 4 unmittelbar vor Verbindung von Deckel 9 und Grundgehäuse 31, also vor Verschließen des Statorgehäuses 3 mit dem Deckel 9. Das elastische Dichtelement 8 weist im Querschnitt die Form einer "5" auf, mit einem L-förmig ausgebildeten Dichtbereich 18 und einem an den L-förmig ausgebildeten Dichtbereich 18 anschließenden, einen Randbereich 30 bildenden Toleranzausgleichselement 19, das eine Bogenform 20 aufweist, wobei sich die Bogenform 20 von dem Dichtbereich 18 in Radialrichtung nach innen abgehend anschließt und dadurch den Radialbereich 30 ausbildet. Die Bogenform 20 des Toleranzausgleichselements 19 weist hierbei eine Bogenwölbung 21 auf, die im Bereich des Stators 4, nämlich im Bereich von dessen dem Deckel 9 zugewandten Statorstirnseite 22 liegt. Das Dichtelement 8 ist hierbei aus einem elastischen Material 23, insbesondere einem Elastomer 24, gebildet ist und weist eine Ringform 25 auf, ist also als Dichtring 26 ausgebildet. Der L-förmige Dichtbereich 18 weist hierbei einen im Wesentlichen quer zur Bogenform 20 des Toleranzausgleichselements 19 erstreckten (also in Axialrichtung des Statorgehäuses 3 liegenden) Schenkel 27 auf, der in einer umlaufenden Ringnut 28, die in eine Gehäusestirnseite 29 des Statorgehäuses 3 eingebracht ist, eingreift. Der Schenkel 27 weist hierbei eine Länge l auf, wobei die Länge l länger ist als eine Tiefe t der Ringnut 28, wobei die Ringnut 28 aber breiter ausgebildet ist als der einliegende Schenkel 27 breit ist.

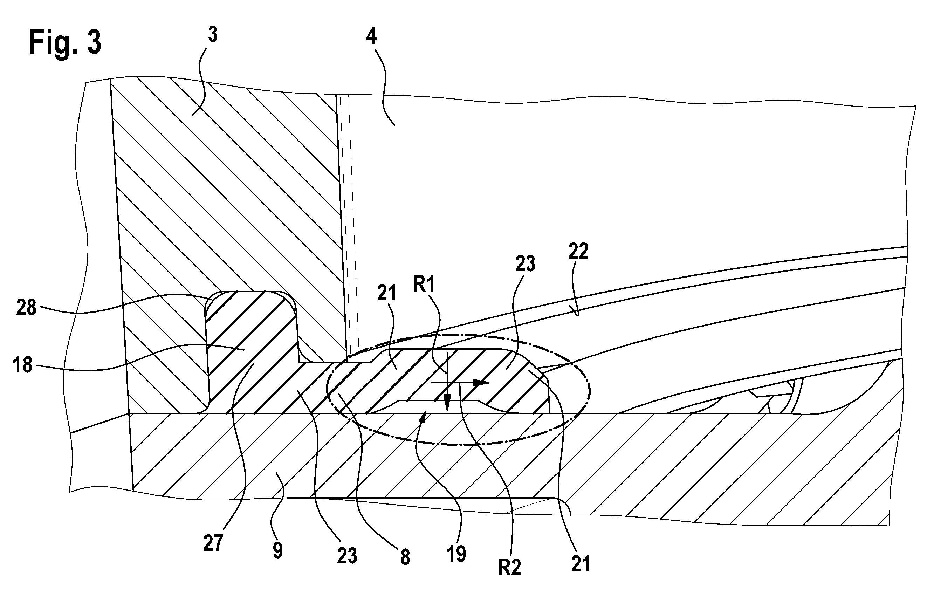

Figur 3 zeigt im Querschnitt im Wesentlichen denselben Ausschnitt wie Figur 2, wobei das Statorgehäuse 3 und der Deckel 9 nunmehr in Berührlage aneinander liegen, also das Statorgehäuse 3 folglich mit dem Deckel 9 verschlossen ist. Das elastische Dichtelement 8 wurde durch die vorstehend zu Figur 2 beschriebene Geometrie verformt, so dass der Schenkel 27 die Weite der Ringnut 28 nunmehr im Wesentlichen vollständig ausfüllt, da er in seiner Länge l (vergleiche Figur 2) die Tiefe t der Ringnut 28 (vergleiche Figur 2) übersteigt; durch das axiale Zusammenfügen von Statorgehäuse 3 und Deckel 9 unter Beaufschlagung des Schenkels 27 des elastischen Dichtelements 8 wurde dessen elastisches Material 23 im Bereich des Schenkels 27 dergestalt verformt, dass es die Ringnut 28 nunmehr im Wesentlichen vollständig ausfüllt. Gleichzeitig beaufschlagt der Stator 4 mit seiner Statorstirnseite 22 die Bogenwölbung 21 des Toleranzausgleichselements 19, das einstückig zum Dichtbereich 18 des Dichtelements 8 ausgebildet ist (vergleiche Figur 2). Auch dieses wird in seinem elastischen Material 23 verformt, indem nämlich die Bogenwölbung 21 durch Beaufschlagung mit der Statorstirnseite 22 in ihrer Bogenhöhe reduziert, also in Richtung auf den Deckel 9 hin gestaucht wird (vergleiche Pfeil R1 im Wesentlichen in Axialrichtung). Gleichzeitig kann eine geringfügige Radialverschiebung in Richtung des Pfeiles R2 nach Innen erfolgen; der Stator 4 wird hierdurch unter Vorspannung im Statorgehäuse 3 gehalten und gegen einen hier nicht dargestellten, im Statorgehäuse 3 im Bereich der Topfbodenseite 16 innenseitig angeordneten Statorsitzes gedrängt; auf diese Weise wird ein Vibrieren oder ein Rütteln, insbesondere bei Beschleunigung durch den Betrieb der elektrischen Maschine 1, vermieden. Durch das Dichtelement 8 ergibt sich im Dichtbereich 18 gleichzeitig eine sehr gute Abdichtung relativ zur Umwelt hin, da die Außenwandungen des Schenkels 27 die umlaufende Ringnut 28 im Wesentlichen vollständig ausfüllen, an Innenwandungen der Ringnut 28 folglich anliegen.

## Patentansprüche

1. Elektronisch kommutierte, elektrische Maschine (1) mit einem Statorgehäuse (3), das in einem Statorraum (13) einen Stator (4) aufnimmt und gegenüber einem einen Rotor aufnehmenden Rotorraum (14) abgrenzt, wobei das Statorgehäuse (3) aus einem Grundgehäuse (31) und einem Deckel (9) besteht, wobei zwischen Grundgehäuse (31) und Deckel (9) ein elastisches Dichtelement (8) angeordnet ist, das mit mindestens einem Radialbereich (30) in das Innere des Statorgehäuses (3) hineinragt und dort ein den Stator (4) beaufschlagendes Toleranzausgleichselement (19) bildet, wobei das Toleranzausgleichselement (19) den Stator (4) in axialer Richtung beaufschlagt, und wobei das Dichtelement (8) als Dichtring (26) ausgebildet ist und einen Dichtbereich (18) zur Abdichtung des Statorgehäuses (3) gegenüber dem Deckel (9) und ein an den Dichtbereich (18) anschließendes, einen Randbereich (30) bildendes Toleranzausgleichselement (19) aufweist, **dadurch gekennzeichnet, dass** der Dichtbereich (18) im Querschnitt L-förmig ausgebildet ist, dass der Dichtring (26) im Querschnitt die Form einer "5" aufweist und dass das Toleranzausgleichselement (19) im nicht beaufschlagten Zustand im Querschnitt zumindest abschnittsweise eine Bogenform (20) aufweist und in einem vom Deckel (9) beaufschlagten Zustand im Querschnitt in seiner Bogenwölbung (21) verkleinert wird.

2. Maschine (1) nach Anspruch 1, **dadurch gekennzeichnet, dass** der Stator (4) ein in das Statorgehäuse (3) axial einsetzbarer Einlegestator (6) ist.

3. Maschine (1) nach einem der vorhergehenden Ansprüche, **dadurch gekennzeichnet, dass** das Statorgehäuse (3) topfförmig ausgebildet ist.

4. Maschine (1) nach einem der vorhergehenden Ansprüche, **dadurch gekennzeichnet, dass** der Deckel (9) einen zentralen Topfbereich (12) aufweist, der in das Innere des Stators (4) hineinragt.

5. Maschine (1) nach einem der vorhergehenden Ansprüche, **dadurch gekennzeichnet, dass** sich der Stator (4) am Statorgehäuse (3) an einem Statorsitz abstützt.

6. Maschine (1) nach einem der vorhergehenden Ansprüche, **dadurch gekennzeichnet, dass** der Dichtbereich (18) zumindest teilweise in einer Ringnut (28) des Statorgehäuses (3) einliegt.

## Claims

1. Electronically commutated electrical machine (1) comprising a stator housing (3) which accommodates a stator (4) in a stator chamber (13) and delimits from a rotor chamber (14) which accommodates a rotor, wherein the stator housing (3) comprises a main housing (31) and a cover (9), wherein an elastic sealing element (8) is arranged between the main housing (31) and the cover (9), the said elastic sealing element projecting into the interior of the stator housing (3) by way of at least one radial region (30) and there forming a tolerance compensation element (19) which acts on the stator (4), wherein the tolerance compensation element (19) acts on the stator (4) in the axial direction, and wherein the sealing element (8) is in the form of a sealing ring (26) and has a sealing region (18) for sealing off the stator housing (3) from the cover (9) and has a tolerance compensation element (19) which adjoins the sealing region (18) and forms an edge region (30), **characterized in that** the sealing region (18) is of L-shaped design in cross section, **in that** the sealing ring (26) is in the shape of a "5" in cross section, and **in that** the tolerance compensation element (19) has an arc shape (20) in cross section at least in sections in the state in which it is not acted on, and the arc curvature (21) of the said tolerance compensation element is reduced in cross section in a state in which it is acted on by the cover (9).

2. Machine (1) according to Claim 1, **characterized in that** the stator (4) is an insertable stator (6) which can be inserted into the stator housing (3) in an axial manner.

3. Machine (1) according to either of the preceding claims, **characterized in that** the stator housing (3) is of pot-like design.

4. Machine (1) according to one of the preceding claims, **characterized in that** the cover (9) has a central pot region (12) which projects into the interior of the stator (4).

5. Machine (1) according to one of the preceding claims, **characterized in that** the stator (4) is supported on the stator housing (3) at a stator seat.

6. Machine (1) according to one of the preceding claims, **characterized in that** the sealing region (18) is situated at least partially in an annular groove (28) of the stator housing (3).

## Revendications

1. Machine électrique (1) à commutation électronique, comprenant un boîtier de stator (3) qui accueille un stator (4) dans un espace à stator (13) et réalise une délimitation par rapport à un espace à rotor (14) accueillant un rotor, le boîtier de stator (3) étant composé d'un boîtier de base (31) et d'un couvercle (9), un élément d'étanchéité (8) élastique étant disposé entre le boîtier de base (31) et le couvercle (9), lequel fait saillie à l'intérieur du boîtier de stator (3) avec au moins une zone radiale (30) et y forme un élément de compensation de tolérance (19) sollicitant le stator (4), l'élément de compensation de tolérance (19) sollicitant le stator (4) dans la direction axiale et l'élément d'étanchéité (8) étant réalisé sous la forme d'une bague d'étanchéité (26) et possédant une zone d'étanchéité (18) destinée à réaliser l'étanchéité du boîtier de stator (3) par rapport au couvercle (9) et un élément de compensation de tolérance (19) formant une zone de bordure (30), rattaché à la zone d'étanchéité (18), **caractérisée en ce que** la zone d'étanchéité (18) est configurée avec une section transversale en forme de L, **en ce que** la bague d'étanchéité (26) présente en section transversale la forme d'un « 5 » et **en ce que** l'élément de compensation de tolérance (19), dans l'état non sollicité, présente en section transversale, au moins dans certaines portions, une forme courbe (20) et, dans un état sollicité par le couvercle (9), sa courbure (21) est réduite en section transversale.

2. Machine (1) selon la revendication 1, **caractérisée en ce que** le stator (4) est un stator d'insertion (6) qui peut être introduit dans le sens axial dans le boîtier de stator (3).

3. Machine (1) selon l'une des revendications précédentes, **caractérisée en ce que** le boîtier de stator (3) est réalisé en forme de pot.

4. Machine (1) selon l'une des revendications précédentes, **caractérisée en ce que** le couvercle (9) possède une zone de pot centrale (12) qui fait saillie à l'intérieur du stator (4).

5. Machine (1) selon l'une des revendications précédentes, **caractérisée en ce que** le stator (4) s'appuie sur un siège de stator au niveau du boîtier de stator (3).

6. Machine (1) selon l'une des revendications précédentes, **caractérisée en ce que** la zone d'étanchéité (18) est introduite au moins partiellement dans une rainure annulaire (28) du boîtier de stator (3).
